Europäisches Patentamt

(19) European Patent Office

Office européen des brevets

(11) Numéro de publication: **0 058 608**
**B1**

(12) FASCICULE DE BREVET EUROPEEN

(45) Date de publication du fascicule du brevet:
11.09.85

(21) Numéro de dépôt: **82400238.0**

(22) Date de dépôt: **10.02.82**

(51) Int. Cl.⁴: **F 16 L 19/02**

(54) Dispositif de raccordement pour canalisations, tubes et tuyauteries et procédé de fabrication de ce dispositif.

---

(30) Priorité: **11.02.81 FR 8102694**

(43) Date de publication de la demande:
**25.08.82 Bulletin 82/34**

(45) Mention de la délivrance du brevet:
**11.09.85 Bulletin 85/37**

(84) Etats contractants désignés:
**AT BE CH DE FR GB IT LI LU NL SE**

(56) Documents cités:
**GB - A - 764 329**
**US - A - 3 056 616**
**US - A - 3 442 537**

(73) Titulaire: **PERMASWAGE S.A., Zone Industrielle des Dames, F-78340 Les Clayes-sous-Bois (FR)**

(72) Inventeur: **Bernardot, Christian, 7 Impasse Alexandre Dumas, F-78370 Plaisir (FR)**

(74) Mandataire: **Rinuy, Guy et al, Cabinet Rinuy et Santarelli 14, Avenue de la Grande Armée, F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

L'invention se rapporte à un accessoire de raccordement pour canalisations, tubes et tuyauteries rigides, tel que décrit dans le préambule de la revendication 1 et connu du joint permanent pour canalisations de la marque PERMASWAGE.

L'accessoire selon l'invention s'applique plus particulièrement mais non exclusivement aux domaines de l'aéronautique, des navires et des plate-formes en mer pour lesquels des impératifs de sécurité élevée doivent être respectés.

On connaît, dans le domaine des canalisations, tubes et tuyauteries, des systèmes de raccordement permanent constitués essentiellement par un raccordement en forme de manchon servant à réunir deux portions de tubes mises dans l'alignement l'une de l'autre. Le manchon est appliqué sur les deux extrémités de tube en présence à l'aide d'un outil de sertissage. De ce fait des zones du manchon prévues à l'extérieur de celui-ci sont radialement serties dans les extrémités de tube par des matrices de l'outil, d'où l'obtention d'un joint permanent, métal contre métal (marque PERMASWAGE). Un raccord de ce type doit posséder, pour son bon fonctionnement, une limite élastique inférieure à celle des tubes sur lesquels il est serti.

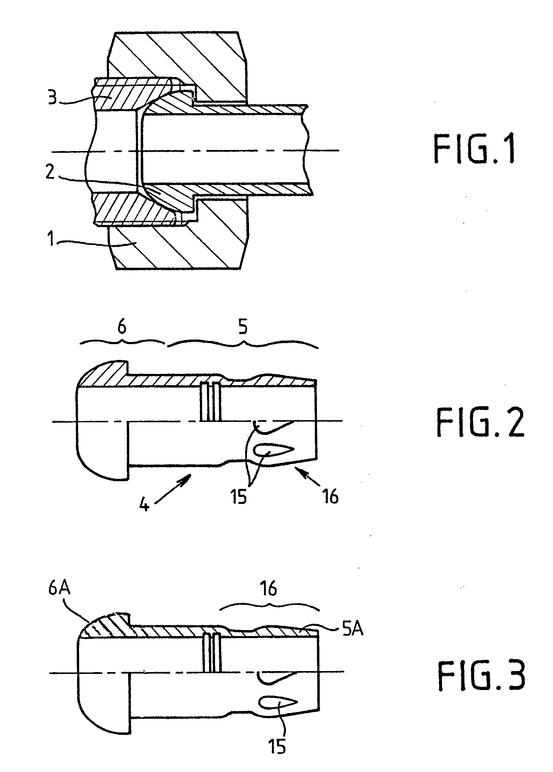

On connaît, par ailleurs, des dispositifs de raccordement démontables utilisés sur des canalisations de fluide, lesquels dispositifs comprennent un écrou (1) voir figure 1. Un dispositif de raccordement de ce type nécessite, parfois, des couples de serrage élevés pour obtenir une bonne étanchéité dans des conditions sévères de travail (par exemple: pression élevée, vibrations, dilatation thermique, etc.), ce qui conduit à adopter pour les divers éléments constitutifs du dispositif des matériaux peu déformables, donc durs. L'étanchéité de ces dispositifs de raccordement est généralement assurée par le contact d'un élément mâle (2) sphérique, torique ou conique, dans un élément femelle conique (3), les angles les plus couramment utilisés étant 24°, 45°, 60°, 80°, 90°.

La présente invention telle que revendiquée dans la revendication 1, entend obtenir un dispositif de raccordement susceptible de remplir, à la fois, le rôle d'un raccordement de sertissage malléable et le rôle d'un dispositif mâle d'un raccord démontable.

On connaît par le brevet US-A-3 442 537 un dispositif en deux pièces, une pièce de sertissage sur un tuyau souple et une pièce de raccordement démontable, réalisés en des matériaux différents et mécaniquement verrouillés entre elles par une opération de forgeage à froid.

Cette disposition n'en demeure pas moins une juxtaposition de deux pièces différentes ce qui est préjudiciable au respect d'impératifs de sécurité élevée notamment dans les domaines de l'aéronautique, des navires et des plate-formes en mer.

Il est envisagé, conformément à l'invention, de développer cette partie adventive plus dure sur l'accessoire malléable à l'origine, par plusieurs procédés, soit métallurgiques soit mécaniques.

Suivant un mode de fabrication, la partie adventive plus dure est obtenue par durcissement localisé par procédés mécaniques.

Il est également envisagé, conformément à l'invention, de développer une partie adventive plus malléable sur l'accessoire dur à l'origine, par hypertrempe localisée, cette hypertrempe faisant baisser la limite élastique dans la zone alors considérée de l'acessoire.

Des réalisations particulières de l'invention sont décrites dans les revendications dépendantes.

D'autres caractéristiques et avantages de la présente invention ressortiront de la description qui va suivre faite en regard des dessins annexés sur lesquels:

la figure 1 représente, en coupe, un dispositif de raccordement démontable à écrou du type connu;

la figure 2 représente, en demi-coupe, un accessoire selon l'invention montrant une partie malléable nécessaire au raccordement serti et une partie adventive plus dure nécessaire au raccordement démontable envisagé;

la figure 3 est une vue en demi-coupe d'un accessoire selon l'invention dans laquelle une partie adventive malléable est obtenue par hypertrempe localisée d'une pièce dure à l'origine;

la figure 4 est une vue en demi-coupe d'un accessoire selon l'invention traité mécaniquement pour obtenir une partie durcie de raccordement démontable; et

la figure 5 est une vue en demi-coupe d'un accessoire selon l'invention traité électrolytiquement à l'effet d'obtenir une partie durcie de raccordement démontable.

On a montré, sur la figure 2, un accessoire (4) selon l'invention comportant une partie malléable de sertissage (5) et une partie adventive mâle de raccordement démontable plus dure (6).

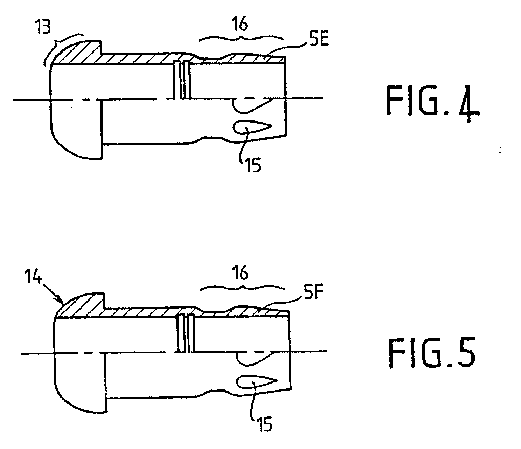

Dans la forme de réalisation représentée à la figure 4, l'accessoire, conforme à l'invention, est entièrement usiné en un matériau malléable qui peut être le 316 L. La zone d'étanchéité (13) du raccordement démontable est obtenu par durcissement de cette zone par écrouissage par galetage. La partie malléable de sertissage (5E) se prolonge donc jusque sous cette zone durcie d'étanchéité (13).

Dans la forme de réalisation représentée à la figure 5, l'accessoire selon l'invention est également entièrement usiné en 316 L hypertrempé ou matériau similaire, le durcissement d'une zone d'étanchéité (14) de raccordement démontable étant obtenu par dépôt électrolytique (chromage dur), la partie malléable de sertissage (5F) s'étend donc, là encore, jusque sous la zone d'étanchéité dur (14).

L'accessoire peut être, en un premier temps, entièrement usiné en un acier inoxydable du type à durcissement structural (par exemple le Z6NCT25) préalablement vieilli pour lui conférer sa dureré maximale. L'accessoire est ensuite soumis è une hypertrempe par induction à haute fréquence, localisée à la partie (5A) (figure 3). Dans le cas du Z6NCT25, cette hypertrempe fait baisser la limite élastique à 0,2%(RO, 2) d'environ 750 MPa à environ 250 MPa.

Après traitement, l'accessoire comporte la partie malléable de sertissage (5A) et la partie plus dure de raccordement démontable (6A). Il doit être remarqué que la partie adventive dure (6, 6A, 13, 14), quel que soit son mode de fabrication, est toujours conformée de manière à réaliser un élément mâle sphérique, torique ou conique de dispositif de raccordement démontable et que la partie malléable de raccord de sertissage (5, 5A, 5E, 5F) comporte au moins une zone (16) destinée à être radialement sertie dans l'extrémité de tube et des moyens destinés à empêcher le raccord de tourner par rapport au tube sur lequel il est définitivement serti. Les moyens empêchant le raccord de tourner peuvent être constitués par des méplats (15) ou encore par une nervure interne qui peut être hélicoïdale.

## Revendications

1. Accessoire de raccordement (4) pour connecter des canalisations rigides telles que tubes et tuyauteries qui comprend une première partie malléable (5) pour une première connexion du type à sertissage radial sur une extrémité de canalisation rigide, caractérisé en ce qu'il comprend une seconde partie à dureté plus élevée (6) constituant l'élément mâle d'une seconde connexion du type à raccord démontable; et en ce que les deux parties (5, 6) forment une seule et unique pièce métallique.

2. Accessoire selon la revendication 1 caractérisé en ce que la partie à dureté plus élevée (6, 6A, 13, 14) forme un élément mâle sphérique, torique ou conique pour un raccord démontable.

3. Accessoire selon l'une quelconque des revendications 1 et 2 caractérisé en ce que la partie malléable (5, 5A, 5E, 5F) comporte au moins une zone (16) destinée à être radialement sertie sur une extrémité de canalisation et des moyens (15) destinés à empêcher la partie malléable (5) de tourner par rapport à la canalisation sur laquelle elle est définitivement sertie.

4. Accessoire selon l'une quelconque des revendications 1 et 3 caractérisé en ce que la partie à dureté plus élevée est développée sur l'accessoire qui est entièrement malléable à l'origine.

5. Mode de fabrication de l'accessoire selon la revendication 4 caractérisé en ce que la partie à dureté plus élevée est obtenue par durcissement localisé.

6. Mode de fabrication selon la revendication 5 caractérisé en ce que le durcissement localisé est obtenu par un procédé mécanique tel que écrouissage ou galetage.

7. Mode de fabrication selon la revendication 5 caractérisé en ce que le durcissement localisé est obtenu par dépôt électrolytique.

8. Accessoire selon l'une quelconque des revendications 1 à 3 caractérisé en ce que la partie malléable est développée sur un accessoire qui est entièrement dur à l'origine.

9. Mode de fabrication de l'accessoire selon la revendication 8 caractérisé en ce que la malléabilité de la partie malléable est obtenue par hypertrempe localisé, cette hypertrempe faisant baisser la limite élastique.

## Patentansprüche

1. Kupplungszubehör (4) zum Verbinden von starren Kanalisationen, wie Rohren und Leitungen, das einen ersten verformbaren Abschnitt (5) für eine erste Verbindung nach Art einer radialen Quetsch-Spannverbindung an einem Ende der starren Kanalisation enthält, dadurch gekennzeichnet, daß es einen zweiten Abschnitt (6) erhöhter Härte enthält, welcher das vorstehende Element einer zweiten Verbindung nach Art einer lösbaren Kupplung bildet, und daß die zwei Abschnitte (5, 6) ein einziges und einheitliches Metallstück bilden.

2. Zubehör nach Anspruch 1, dadurch gekennzeichnet, daß der Abschnitt (6, 6A, 13, 14) erhöhter Härte ein sphärisches, torisches oder konisches vorstehendes Element für eine abnehmbare Verbindung bildet.

3. Zubehör nach einem der Ansprüche 1 oder 2, dadurch gekennzeichnet, daß der verformbare Abschnitt (5, 5A, 5E, 5F) mindestens eine Zone (16) enthält, die dazu bestimmt ist, radial an ein Ende der Kanalisation quetsch-verspannt zu werden, und Mittel (15), die dazu bestimmt sind, ein Verdrehen des verformbaren Abschnittes (5) bezüglich der Kanalisation zu verhindern, bei der sie definitiv quetsch-verspannt ist.

4. Zubehör nach einem der Ansprüche 1 und 3, dadurch gekennzeichnet, daß der Abschnitt erhöhter Härte an dem ursprünglich vollständig formbaren Zubehör ausgebildet ist.

5. Herstellverfahren für das Zubehör nach Anspruch 4, dadurch gekennzeichnet, daß der Abschnitt erhöhter Härte durch örtliche Härtung erzielt wird.

6. Herstellverfahren nach Anspruch 5, dadurch gekennzeichnet, daß die örtliche Härtung durch einen mechanischen Vorgang wie Kaltverformen oder Drücken erreicht wird.

7. Herstellverfahren nach Anspruch 5, dadurch gekennzeichnet, daß die örtliche Härtung durch elektrolytische Abscheidung erreicht wird.

8. Zubehör nach einem der Ansprüche 1 bis 3, dadurch gekennzeichnet, daß der verformbare Abschnitt an einem ursprünglich insgesamt harten Zubehörteil ausgebildet ist.

9. Herstellverfahren für das Zubehör nach Anspruch 8, dadurch gekennzeichnet, daß die Verformbarkeit des verformbaren Abschnittes durch örtliches Überhärten erreicht wird, das ein Erniedrigen der Elastizitätsgrenze bewirkt.

## Claims

1. A connector accessory (4) for connecting rigid conduits such as tubes and pipes, which comprises a first malleable portion (5) for a first connection of the radial crimping type to one end of a rigid conduit, characterized in that it comprises a second portion of higher hardness (6) forming the male element of a second connection of the dismountable connector type, and in that both portions (5, 6) constitute one and the same single metallic part.

2. An accessory according to claim 1, characterized in that the portion of higher hardness (6, 6A, 13, 14) forms a spherical, toroidal or conical male element for a dismountable connector.

3. An accessory according to any one of claims 1 and 2, characterized in that the malleable portion (5, 5A, 5E, 5F) comprises at least one zone (16) for radial crimping onto a conduit end and means (15) for preventing the malleable portion (5) from rotating relative to the conduit to which it is finally crimped.

4. An accessory according to any one of claims 1 and 3, characterized in that the portion higher hardness is developped on the accessory which is entirely malleable initially.

5. A mode of manufacturing the accessory according to claim 4, characterized in that the portion of higher hardness is obtained by localized hardening.

6. A mode of manufacturing according to claim 5, characterized in that the localized hardening is obtained by a mechanical method such as cold-drawing or cold-rolling.

7. A mode of manufacturing according to claim 5, characterized in that localized hardening is obtained by electrolytic deposition.

8. An accessory according to any one of claims 1 to 3, characterized in that the malleable portion is developped on an accessory which is entirely hard initially.

9. A mode of manufacturing the accessory according to claim 6, characterized in that malleability of the malleable portion is obtained by localized hypertempering, such hypertempering lowering the elastic limit.

FIG.1

FIG.2

FIG.3

FIG. 4

FIG.5